# EUROPÄISCHE PATENTANMELDUNG

(11) **EP 2 020 523 A1**
(43) Veröffentlichungstag der Anmeldung: **04.02.2009**
(21) Anmeldenummer: 08013560.1
(22) Anmeldetag: 28.07.2008
(51) Int. Cl.: F16D 65/14, F16D 55/228, F16D 55/00

(54) **Hydraulische Feststellbremse**

(30) Priorität: 01.08.2007 DE 102007036036
(71) Anmelder: Pintsch Bubenzer GmbH, 57548 Kirchen-Wehbach (DE)
(72) Erfinder: Treude, Hans-Walter, 57234 Wilnsdorf (DE)
(74) Vertreter: Samson & Partner

(57) **Zusammenfassung**

Die vorliegende Erfindung betrifft eine Bremseinrichtung (1) zum Feststellen eines Fahrzeugs mit einer zwischen einer Ruhelage und einer Arbeitslage verstellbaren Hydraulikzylindereinheit (32, 34, 36), die über eine Verteilerleitung (40, 42, 44, 46) hydraulisch mit einem Zylinderkolbenelement (14) zum Verstellen eines auf einen Bremskörper (6) wirkenden Bremselements (10, 12) gekoppelt ist. Dabei ist die Hydraulikzylindereinheit (32, 34, 36) so angeordnet, daß sie einen zur Aufnahme von Hydraulikflüssigkeit vorgesehenen Vorratsraum (28) durchsetzt. Die Erfindung betrifft ebenfalls eine Bremsanlage mit einer solchen erfindungsgemäßen Bremseinrichtung (1) sowie ein Fahrzeug mit einer entsprechenden Bremsanlage bzw. einer Bremseinrichtung (1).

## Beschreibung

Die vorliegende Erfindung betrifft eine Bremseinrichtung zum Feststellen (Bremsen) eines Fahrzeugs. Dabei ist eine Hydraulikzylindereinheit vorgesehen, die zwischen einer Ruhelage und einer Arbeitslage verstellbar ist, über eine Verteilerleitung hydraulisch mit einem oder mehreren Zylinderkolbenelementen gekoppelt ist, und in ihrer Arbeitslage eines oder mehrere auf einen Bremskörper wirkende Bremselemente verstellt, um den Bremskörper festzusetzen.

Solche Feststellbremsen sind im Fahrzeug- und Automobilbereich bekannt. Neben den bekannten Seilzug-betätigten "Handbremsen" gibt es auch hydraulisch betätigte Bremseinrichtungen. Ein hydraulischer Bremshauptzylinder, der einen Vorrat ist zum Beispiel aus der GB 872,272 bekannt. Eine hydraulisch betriebene Scheibenbremse ist z.B. aus der US 3,896,907 bekannt. Einen Bremskraftverstärker zeigt die DE-A-43 39 449. Solche Komponenten sind in einem Kraftfahrzeug hydraulisch über unabhängige Leitungen zu einer Bremsanlage miteinander gekoppelt.

Es gibt Einsatzgebiete, bei denen neben der bereits am Fahrzeug vorhandenen Feststellbremse eine zusätzliche Bremseinrichtung vorgesehen werden soll, um ein Wegrollen des Fahrzeugs zu verhindern. Insbesondere bei Fahrzeugen zur Personenbeförderung (Omnibusse, Kleinbusse, etc.) sind solche zusätzlichen Feststellbremsen erforderlich. Dabei soll beispielsweise sichergestellt werden, daß beim Betreten und Verlassen (Ein- und Aussteigen) eines solchen Fahrzeuges dieses nicht wegrollt, um Unfälle zu verhindern.

Dazu könnte der Fahrer während des Ein- und Aussteigevorgangs die Fahrzeugbremse betätigen (normale Bremsanlage) oder die Handbremse fixieren. Dies ist aber insbesondere im Liniendienst nur wenig praktikabel, da die normalen Handbremsen normalerweise für so ein häufige Betätigung nicht vorgesehen sind und die normal über ein Fußpedal betätigte Bremsanlage das Fahrzeug zwar hinreichend feststellen kann, aber die Gefahr besteht, daß bei Fehlbedienungen die Unfallgefahr erheblich zunimmt - beispielsweise wenn der Fahrer beim Einsteigevorgang vom Bremspedal auf das Gaspedal abrutscht bzw. beim Anhalten an einer Steigung das Bremspedal nicht kräftig genug betätigt.

Ein Lösungsansatz kann darin bestehen, die vorhandenen Bremsanlagen in eine Sicherungseinrichtung mit einzubeziehen, die beispielsweise die normale Bremsanlage oder die Feststellbremse beim Öffnen der Türen automatisch betätigt. Die üblichen Bremsanlagen sind aber für so eine Ansteuerung in der Regel nicht eingerichtet. So eine automatische Betätigung, beispielsweise beim Türöffnen, würde sehr einschneidende Eingriffe in diese sicherheitstechnisch hoch relevanten Bremsanlagenkomponenten erfordern. Es wären aufwendige Ein-und Umbauten erforderlich, die bei Fahrzeugtypen, die sowohl für den Personentransport als auch für den reinen Gütertransport vorgesehen sind, nicht immer erwünscht sind.

Daher ist es sinnvoller, eine zusätzliche Bremseinrichtung vorzusehen, die neben den bereits vorhandenen Bremseinrichtungen (Handbremse, Bremsanlage) und unabhängig von diesen funktioniert. Moderne Fahrzeuge sind Nutzlast- und Nutzraumoptimiert ausgelegt. Es ist daher oft schwierig, in den vorhandenen Antriebssträngen zusätzliche Elemente oder Einrichtungen zum Bremsen vorzusehen. Jedenfalls müssen solche nachrüstbaren Bremsen zum einen sehr kompakt ausgeführt sein und zum andern dürfen sie keine Lastfälle verursachen, die zu vorzeitigem Verschleiß oder zu Beschädigungen an den vorhandenen Fahrzeugkomponenten führen könnten. Gleichzeitig sollten solche zusätzlichen Bremseinrichtungen auch möglichst wartungsarm und weitgehend verschleißfrei arbeiten.

Es besteht also die Aufgabe, eine kompakte Bremseinrichtung bereitzustellen, welche mit geringem Umbauaufwand in ein vorhandenes Fahrzeugkonzept integrierbar ist und mit den vorhandenen Antriebskomponenten kompatibel ist.

Diese Aufgabe erfüllt die Bremseinrichtung gemäß Anspruch 1, bei der die zum Antrieb vorgesehene Hydraulikzylindereinheit einen zur Aufnahme von Hydraulikflüssigkeit vorgesehenen Vorratsraum durchsetzend angeordnet ist und die sich dadurch auszeichnet, dass Vorratsraum (28) und Verteilerleitung (40, 42, 44, 46) in einem Gehäuse (2, 2a, 2b) ausgebildet sind, welches das Zylinderkolbenelement (14) und das Bremselement (10, 12) und die Hydraulikzylindereinheit (32, 34, 36) aufnimmt.Diese Bauweise erlaubt eine besonders kompakte Konstruktion, mit erheblich verringertem Platzbedarf, da Vorratsraum und Hydraulikzylindereinheit Kolbenelement und Bremselement eine räumliche und bauliche Einheit bilden und "ineinandergeschachtelt" bzw. integriert angeordnet sind.

Zusätzlich ist die Hydraulikzylindereinheit als zentrales Funktionselement einer solchen Bremseinrichtung optimal geschützt untergebracht. Die Anordnung innerhalb des Aufnahmeraums für Hydraulikflüssigkeit bietet einen sehr wirksamen mechanischen Schutz gegen Fremdeinwirkungen von außen, insbesondere wenn eine solche Bremseinrichtung am Fahrzeugboden beispielsweise im Bereich einer Kardanwelle angeordnet sein soll. Steinschlag oder ähnliches können die Hydraulikzylindereinheit nicht beschädigen. Daneben bietet die Anordnung innerhalb der Hydraulikflüssigkeit weitgehend Schutz gegen andere Umwelteinflüsse wie Feuchtigkeit und Verschmutzung.

In der Weiterbildung gemäß Anspruch 2 ist der Wirkraum der Hydraulikzylindereinheit, über den der hydraulische Druck durch Wirkung eines Kolbens in der Verteilerleitung und damit in den Zylinderkolbenelementen aufgebaut wird, über eine Verteileranordnung mit der Verteilerleitung und/oder dem Vorratsraum koppelbar. Diese Anordnung erlaubt zum einen eine räumlich und funktional getrennte Anordnung von Hydraulikzylindereinheit und Vorratsraum einerseits und der Verteilerleitung und dem oder den Zylinderkolbenelementen andererseits. Die Kopplung über eine Verteileranordnung, über die die Hydraulikzylindereinheit auch mit dem Vorratsraum direkt koppelbar sein kann, ist sehr betriebsfreundlich, da so die gesamte Bremsanlage sehr einfach vollständig mit Hydraulikflüssigkeit gefüllt werden kann. Das Entlüften ist weitgehend unabhängig von der Einbaulage der Bremseinrichtung möglich.

Die Weiterbildung gemäß Anspruch 3 erlaubt es im Betrieb auftretenden Verschleiß der Bremselemente und/oder des Bremskörpers - also der Bremsbeläge und beispielsweise einer Bremsscheibe oder einer Bremstrommel - auszugleichen, indem das wirksame Hydraulikflüssigkeitsvolumen beim Betrieb der Bremse dem Verschleiß entsprechend ergänzt wird. So ist sichergestellt, daß sich die Funktionseigenschaften (Ansprechzeit, Ansprechkraft der Bremse) auch über einen längeren Betriebszeitraum nicht oder nur geringfügig verändern. Weiterhin werden die Betriebsdauer und damit die Wartungsintervalle verlängert, da die verschleißenden Bremsbauteile (Bremsbeläge, Bremskörper) länger einsetzbar sind.

Die Weiterbildungen gemäß der Ansprüche 4 bis 8 betreffen Merkmale, die die erfindungsgemäße Bremseinrichtung besonders für den Fahrzeugeinsatz geeignet machen. Dabei wird gemäß Anspruch 4 auf die bewährte Bremstechnologie einer Scheibenbremse zurückgegriffen und gemäß Anspruch 5 ist eine besonders kompakte Gehäusebauform realisierbar. Anspruch 6 erleichtert die Nachrüstung einer erfindungsgemäßen Bremseinrichtung an vorhandenen Fahrzeugbauteilen. Die Bremseinrichtung kann so ohne aufwendige konstruktive Maßnahmen an einer vorhandenen Kardanwelle angeordnet werden, die aus Gründen des Fahrkomforts an ihren Enden über elastische Kupplungen mit angrenzenden Elementen des Antriebsstranges gekoppelt ist, ohne daß die Gefahr besteht, daß durch zusätzlich aufgebrachte Biegemomente diese Kupplungselemente verschlissen oder beschädigt werden.

Die Ansprüche 7 und 8 betreffen eine fertigungsgünstige Bauweise. Dabei sind die Bremsschuhelemente gemäß Anspruch 7 leicht herstell- und/oder bearbeitbar und zu verbinden und die Ausführung gemäß Anspruch 8 erlaubt wieder um eine besonders kompakte und montagefreundliche Ausführung.

Gemäß Anspruch 9 kann die Bremseinrichtung mit einer an den meisten Nutzfahrzeugen vorhandenen Pneumatikeinrichtung verbunden, und über diese betätigt werden. Dabei betrifft die Weiterbildung gemäß Anspruch 10 die steuerungstechnische Kopplung der Bremseinrichtung an bestimmte Betriebszustände des Fahrzeugs (zum Beispiel Tür offen, Tür geschlossen). Anspruch 11 betrifft eine Bremsanlage, bei der eine erfindungsgemäße Bremseinrichtung auf eine im Antriebsstrang angeordnete Bremsscheibe wirkt und Anspruch 12 betrifft ein Fahrzeug mit einer solchen Bremsanlage.

Ein Ausführungsbeispiel der vorliegenden Erfindung wird nachfolgend anhand der Zeichnungen erläutert. Dabei zeigen:
- Fig. 1: eine Seitenansicht einer erfindungs- gemäßen Bremseinrichtung,
- Fig. 2: eine weitere Ansicht der in Fig. 1 gezeigten Bremseinrichtung,
- Fig. 3: eine Ansicht in Richtung der Brems- scheibenachse der in Fig. 1 und 2 dargestellten Bremseinrichtung,
- Fig. 4: eine Schnittansicht (̵B-B in Fig. 3) eines Bremsschuhbereichs der in den Fig. 1 bis 3 dargestellten Bremsein- richtung, und
- Fig. 5: ein Längsschnitt (A-A in Fig. 3) der in den Fig. 1 bis 3 dargestellten Bremseinrichtung.

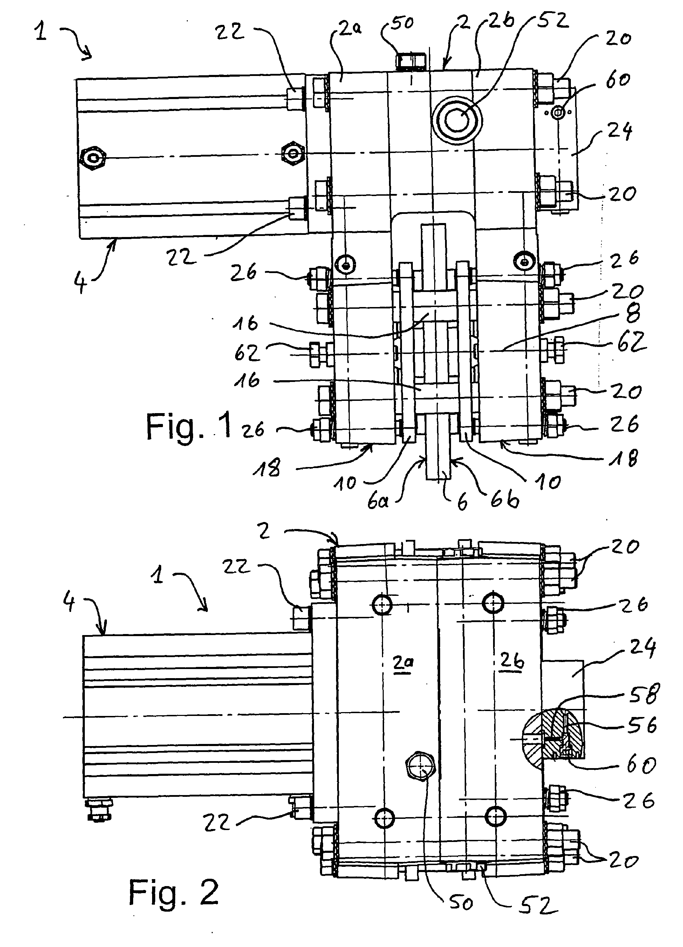

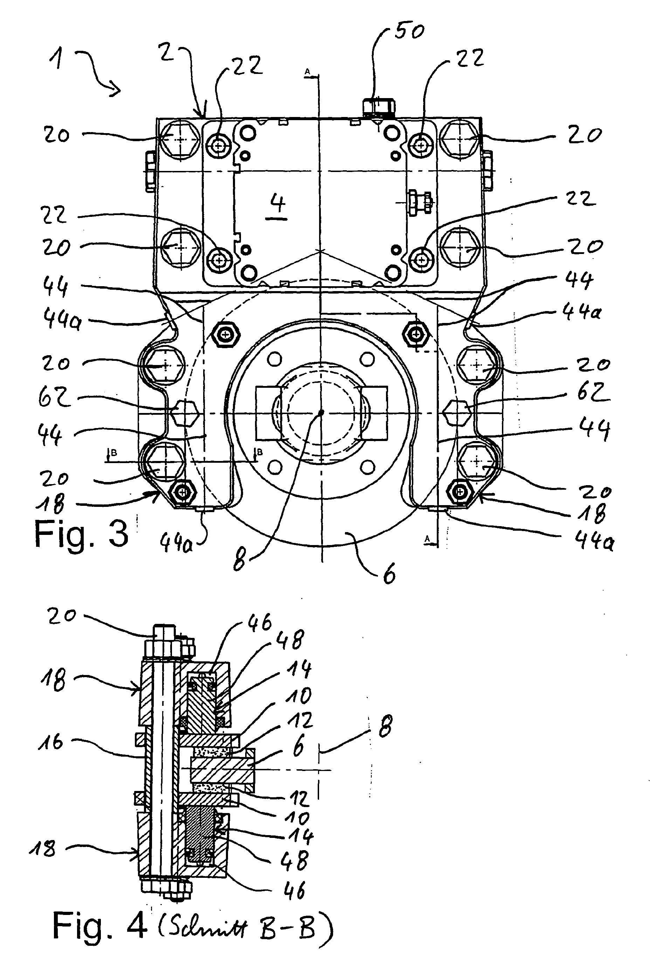

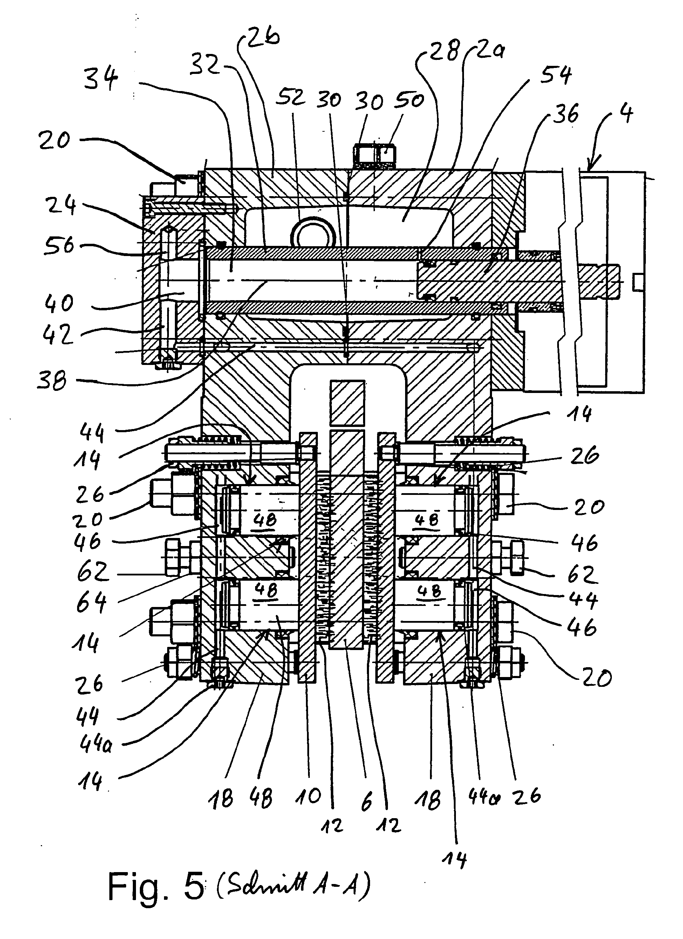

Fig. 1 bis 5 zeigen ein erfindungsgemäßes Ausführungsbeispiel einer Bremseinrichtung 1 mit einem Hydraulikgehäuse 2, einem Pneumatikantrieb 4 und einer Bremsscheibe 6, die um eine Achse 8 drehbar auf einer nicht weiter dargestellten Kardanwelle eines Fahrzeugs angeordnet ist. Auf die Bremsscheibe 6 wirken Bremsbelagträger 10, die jeweils mit den einander gegenüberliegend angeordneten Bremsbelägen 12 an den Radialflächen 6a und 6b der Bremsscheibe 6 angreifen. Die Bremsbelagträger 10 werden über hydraulische Zylinderkolbenelemente 14 betätigt und verlaufen linear geführt auf Führungsbuchsen 16, die gleichzeitig als Abstandhalter zwischen den Gehäuseteilen 2a und 2b in den Bremsschuhbereichen 18 dienen (Fig. 4). Die Gehäuseteile 2a und 2b mit den einstückig daran ausgebildeten Bremsschuhbereichen sind über Spannschrauben 20 miteinander verbunden. Der Pneumatikantrieb 4 ist über Befestigungsschrauben 22 am Gehäuseteil 2a angeflanscht. Dem Pneumatikantrieb 4 in axialer Richtung gegenüberliegend ist ein eine Verteileranordnung bildender Hydraulikblock 24 angeordnet, dessen Funktion weiter unten beschrieben wird. Auf die Bremsbelagträger 10 wirken federbelastete Rücksteller 26, die sich gegen die Bremsschuhe 18 abstützen und die Bremsbeläge 12 von der Bremsscheibe 6 lösen, wenn die Zylinderkolbenelemente 14 drucklos sind (siehe Fig. 5).

Fig. 5 zeigt im Längsschnitt einen Vorratsraum 28 für Hydraulikflüssigkeit (nicht-dargestellt), der zwischen den beiden Gehäuseteilen 2a und 2b verläuft und über eine Dichtung 30 abgedichtet ist. Den Vorratsraum 28 durchsetzt ein Zylinder 32 in dessen Wirkraum 34 der Arbeitskolben 36 verläuft. Der Arbeitskolben 36 wird über den Pneumatikantrieb 4 in bekannter Weise im Zylinder 32 in Richtung der Achse 38 hin-und her verschoben.

Der Wirkraum 34 ist über entsprechende Ausnehmungen 40 und Kanäle 42 im Hydraulikblock 24 kommunizierend mit den Verteilerleitungen 44 verbunden. Die münden wiederum in die Kopfbereiche 46 der Zylinderkolbenelemente 14, so daß beim Verstellen des Arbeitskolbens 36 in Richtung Hydraulikblock 24 die Hydraulikflüssigkeit aus dem Wirkraum 34 durch die Kanäle 40, 42 im Hydraulikblock 24 in die Verteilerleitungen 44 und die Kopfbereiche 46 der Zylinderkolbenelemente 14 gedrückt wird. So werden die Kolben 48 der Zylinderkolbenelemente 14 gegen den Bremsbelagträger 10 und damit die Bremsbeläge 12 an die Radialflächen 6a, 6b der Bremsscheibe 6 gedrückt, so daß diese und die drehfest mit der Bremsscheibe 6 verbundene Kardanwelle (nicht dargestellt) blockiert ist. Die Verteilerleitungen 44 sind als Bohrungen in den Gehäuseteilen 2a, 2b ausgebildet und nach außen über Stopfen 44a verschlossen.

Zum Lösen der Bremseinrichtung 1 führt der Pneumatikantrieb 4 den Arbeitskolben 36 zurück und die Bremsbelagträger 10 lösen sich zusammen mit den Bremsbelägen 12 durch den entstehenden Unterdruck in den Verteilerleitungen 44 und durch die Federkraft der Rücksteller 26 wieder von der Bremsscheibe 6 und geben diese frei.

Zum Befüllen mit Hydraulikflüssigkeit und zum Entlüften der Bremseinrichtung 1 ist folgendes vorgesehen. Im Gehäuseteil 2a ist eine Füllöffnung 50 vorgesehen, durch die Hydraulikflüssigkeit in den Vorratsraum 28 eingefüllt werden kann. Ein Schauglas 52 dient der Füllstandskontrolle. Im Zylinder 32 ist eine Querbohrung 54 vorgesehen, die den Wirkraum 34 mit dem Vorratsraum 28 verbindet, wenn sich der Arbeitskolben 36 in der in Fig. 5 dargestellten Ruhestellung befindet. Zum Füllen wird nun der Arbeitskolben durch den Pneumatikantrieb 4 hin und her bewegt (Pumpen ohne Betätigung der Zylinderkolbenelemente 14). Durch den entstehenden Unterdruck im Wirkraum 34 strömt mehr und mehr Hydraulikflüssigkeit in den Wirkraum 34 und damit in das gesamte Hydrauliksystem (Kanäle 40, 42, Verteilerleitungen 44, Kopfbereiche 46), bis dieses weitgehend gefüllt ist.

Zusätzlich ist zum Befüllen und Entlüften der Kanäle 40 und 42 der Verteilerleitung 44 und der Kopfbereiche 46 im Hydraulikblock 24 ein Verbindungskanal 56 vorgesehen, der über einen weiteren Querkanal 58 (Fig. 2) den Wirkraum 34 mit dem Vorratsraum 28 verbindet, und zwar über die Ventilschraube 60 im Hydraulikblock 24. Diese Ventilschraube 60 wird beim Befüllen des Hydrauliksystems so weit geöffnet, daß der Vorratsraum 28 über den Querkanal 58 und den Verbindungskanal 56 mit dem Wirkraum 34 und damit mit den Kanälen 40, 42 und der Verteilerleitung 44 verbunden ist, so daß hier ebenfalls beim Befüllen Hydraulikflüssigkeit in das System gelangen kann. Ist das System vollständig gefüllt, wird die Ventilschraube 60 geschlossen und der Vorratsraum über die Füllöffnung 50 vollständig mit Hydraulikflüssigkeit gefüllt. Das System ist nun betriebsbereit.

Beim normalen Betrieb der Bremseinrichtung 1 stellt die Querbohrung 54 sicher, daß auch bei Verschleiß der Bremsbeläge 12 beziehungsweise der Bremsscheibe 6 und den damit verbundenen verlängerten Stellwegen das Drucksystem (bestehend aus dem Wirkraum 34, den Kanälen 40 und 42 sowie der Verteilerleitung 44 und den Kopfbereichen 46) beim Lüften beziehungsweise beim Lösen der Bremseinrichtung, das heißt, wenn der Arbeitskolben 36 in seine Ruhestellung gebracht wird (Stellung in Fig. 5) , immer wieder vollständig mit Hydraulikflüssigkeit aus dem Vorratsraum 28 befüllt wird. Auf diese Weise kann über einen relativ großen Bereich auftretender Verschleiß ausgeglichen werden. Der Lüftweg bzw. Stellweg der Bremsbelagträger 10 ist über Stellelemente 62 einstellbar, deren Stellung über Kontermuttern 64 fixierbar ist. Die Stellelemente 62 werden beim Einbau und bei der Wartung entsprechend dem gewünschten Stellweg eingestellt.

Bei einer Fahrzeugbremsanlage dient die oben dargestellte Bremseinrichtung 1 dazu, beim Öffnen von Türen das Fahrzeug gegen Wegrollen zu sichern. Dazu wird der Pneumatikantrieb 4 über eine nicht-dargestellte Steuerung betätigt. Die Steuerung erfaßt dabei Zustandssignale von Detektoren (nicht gezeigt), die die Stellung der Tür erfassen. Beim Öffnen der Tür wird ein entsprechendes Signal an die Steuerung abgegeben, die daraufhin den Pneumatikantrieb 4 aktiviert, so daß der Kolben 36 aus seiner Ruhelage in seine Arbeitslage gebracht wird und die Bremseinrichtung 1 die Bremsscheibe 6 über die Bremselemente 10, 12 blockiert. Das Fahrzeug ist gegen Wegrollen gesichert. Wird die Tür wieder geschlossen, wird auf ein entsprechendes Signal hin die Bremseinrichtung 1 wieder gelöst.

Neben dem dargestellten Pneumatikantrieb kann der Arbeitskolben 36 auch mit einem anderen Linearantrieb verfahren werden (z.B. elektromagnetisch, elektromechanisch, hydraulisch).

Im dargestellten Ausführungsbeispiel sind zwei Bremsbelagpaare 12 einander gegenüberliegend an den die Bremsscheibe 6 und die Achse 8 hufeisenförmig umgebenden Bremsschuhbereichen 18 angeordnet (siehe Fig. 3). Diese Anordnung verhindert, daß Biegekräfte auf die abzubremsende, mit der Bremsscheibe 6 gekoppelte Welle übertragen werden. Dies ist insbesondere bei gummigelagerten Kardanwellenelementen erforderlich. In anderen Ausführungen kann die Hydraulik auch auf nur ein einziges Bremsbelagpaar wirken. Es gibt aber auch Ausführungen, bei denen mehr als zwei Bremsbelagpaare beaufschlagt werden. Neben der dargestellten Ausführung als Scheibenbremse ist es auch möglich, die hydraulische Bremseinrichtung für eine Trommelbremse auszuführen.

Weitere Variationen und Ausführungen der vorliegenden Erfindung ergeben sich für den Fachmann im Rahmen der anhängenden Ansprüche.

## Patentansprüche

1. Bremseinrichtung (1) zum Feststellen eines Fahrzeugs mit einer zwischen einer Ruhelage und einer Arbeitslage verstellbaren Hydraulikzylindereinheit (32, 34, 36), die über eine Verteilerleitung (40, 42, 44, 46) hydraulisch mit einem Zylinderkolbenelement (14) zum Verstellen eines auf einen Bremskörper wirkenden Bremselements (10, 12) gekoppelt ist,
wobei die Hydraulikzylindereinheit (32, 34, 36) einen zur Aufnahme von Hydraulikflüssigkeit vorgesehenen Vorratsraum (28) durchsetzend angeordnet ist, **dadurch gekennzeichnet, dass** Vorratsraum (28) und Verteilerleitung (40, 42, 44, 46) in einem Gehäuse (2, 2a, 2b) ausgebildet sind, welches das Zylinderkolbenelement (14) und das Bremselement (10, 12) und die Hydraulikzylindereinheit (32, 34, 36) aufnimmt.

2. Bremseinrichtung (1) nach Anspruch 1, bei welcher ein Wirkraum (34) der Hydraulikzylindereinheit über eine Verteileranordnung (24, 40, 42, 56, 58) mit der Verteilerleitung (44) und/oder dem Vorratsraum (28) koppelbar ist.

3. Bremseinrichtung (1) nach Anspruch 1 oder 2, bei welcher der Wirkraum (34) in der Ruhelage (Lüftstellung) der Hydraulikzylindereinheit (32, 34, 36) über einen Verbindungskanal (54) in kommunizierender Verbindung zum Vorratsraum (28) steht, so daß dem Wirkraum (34) Hydraulikflüssigkeit zugeführt wird, und
der Verbindungskanal (54) in der Arbeitslage der Hydraulikzylindereinheit (32, 34, 36) durch ein Kolbenelement (36) der Hydraulikzylindereinheit (32, 34, 36) verschlossen ist.

4. Bremseinrichtung (1) nach einem der Ansprüche 1 bis 3, bei welcher mehrere Zylinderkolbenelemente (14) einander gegenüberliegend auf mehrere Bremselemente (10, 12) wirken, welche zum Bremsen an den gegenüberliegenden Radialflächen (6a, 6b) einer Bremsscheibe (6) angreifen.

5. Bremseinrichtung (1) nach Anspruch 4, bei welcher die Zylinderkolbenelemente (14) in einem die Bremsscheibe (6) und deren Rotationsachse (8) hufeisenförmig umgebenden Bremsschuh (18) angeordnet sind.

6. Bremseinrichtung (1) nach Anspruch 4 oder 5, bei welcher jeweils zwei Bremselementpaare (10, 12) einander bezüglich der Rotationsachse (8) symmetrisch gegenüberliegend auf die Bremsscheibe (6) wirken, ohne daß ein Biegemoment auf eine mit der Bremsscheibe (6) gekoppelte Welle ausgeübt wird.

7. Bremseinrichtung (1) nach Anspruch 4, 5 oder 6, bei welcher der Bremsschuh (18) mehrteilig ausgebildet ist, wobei die Teile über diese durchsetzende Spannschrauben (20) dicht miteinander koppelbar sind.

8. Bremseinrichtung (1) nach Anspruch 7, bei welcher der Vorratsraum (28), die Verteilerleitungen (44) und deren in die Verteileranordnung (24) mündenden Öffnungen integral in den Bremsschuhteilen (18) ausgebildet sind.

9. Bremseinrichtung (1) nach einem der vorhergehenden Ansprüche, bei welcher die Hydraulikzylindereinheit (32, 34, 36) über eine Pneumatikeinrichtung (4) betätigt wird.

10. Bremseinrichtung (1) nach Anspruch 9, bei welcher die Pneumatikeinrichtung (4) mit einer Steuerung verbunden ist, welche die Stellung der Pneumatikeinrichtung entsprechend einem Sensorsignal steuert, welches die Stellung eines Fahrzeugbauteils, insbesondere den Schließzustand einer Fahrzeugtür, erfaßt.

11. Bremsanlage für ein Fahrzeug, mit einer im Antriebsstrang angeordneten Bremsscheibe (6), auf die eine Bremseinrichtung (1) gemäß einem der vorhergehenden Ansprüche wirkt.

12. Fahrzeug mit einer Bremsanlage nach Anspruch 11.
